# EUROPÄISCHE PATENTSCHRIFT

(11) **EP 2 335 478 B1**
(45) Veröffentlichungstag und Bekanntmachung des Hinweises auf die Patenterteilung: **25.06.2014**
(21) Anmeldenummer: 10075736.8
(22) Anmeldetag: 13.11.2010
(51) Int. Cl.: A01K 61/00

(54) **Vorrichtung zur Ansiedelung und Erntung von marinen Hartbodentieren**
Device for settling and harvesting marine animals
Dispositif de colonisation et de récolte d'animaux marins

(30) Priorität: 13.12.2009 DE 102009058278
(43) Veröffentlichungstag der Anmeldung: 22.06.2011
(73) Patentinhaber: Alfred-Wegener-Institut Helmholtz-Zentrum für Polar- und Meeresforschung, 27570 Bremerhaven (DE)
(72) Erfinder: Krone, Roland, 28203 Bremen (DE); Krämer, Philipp, 26121 Oldenburg (DE)

(56) Entgegenhaltungen:
- EP-A1- 1 969 925
- EP-A2- 1 466 523
- WO-A2-2006/038091
- DE-U1- 20 310 089
- US-A- 5 596 947

## Beschreibung

Die Erfindung bezieht sich auf eine Vorrichtung zur Ansiedelung und Erntung von marinen Hartbodentieren im Unterwasserbereich von bodengegründeten Offshore-Bauwerken mit zumindest einer Schieneneinrichtung zur Aufnahme einer mittels einer Hebeeinrichtung vertikal verfahrbaren Netzeinrichtung für die Hartbodentiere.

Marine Bauwerke sind für die Besiedelung durch Hartbodentierarten geeignet. Dies ist besonders deutlich dort zu beobachten, wo natürliche Besiedlungsstrukturen fehlen, wie z.B. in den Weichbodengebieten der südlichen Nordsee. Hier dienen die Oberflächen der Bauwerke, beispielsweise Pylone von Windkraftanlagen, den Rifftieren als Besiedlungsflächen. Zur Anreicherung von solchen Rifftieren werden weltweit verschiedene Typen so genannter "künstlicher Riffe" im Meer montiert oder versenkt. Die Netzfischerei mit Schleppnetzen und Baumkurren ist im unmittelbaren Nahbereich von marinen Bauwerken schwierig oder ausgeschlossen. Außerdem ist sie nicht nachhaltig und kann schnell zu einer Überfischung führen. Bislang wurden marine Hartbodentiere, wie beispielsweise Hummer, Krebse, Schnecken, Muscheln und einige Fischsorten, in unzugänglichen Gebieten oder schwer befischbaren Meeresböden mit beköderten Fallen, z.B. Hummerkörben, gefangen. Beköderte Fallen müssen aber kurze Zeit nach dem Ausbringen wieder eingeholt werden. Sie können also nicht, beispielsweise bei Schlechtwetterlagen, über unbegrenzte Zeit vor Ort belassen werden, ohne den Fang zu gefährden. Außerdem können sich derartige Fallen an Bauwerksteilen verfangen oder am Meeresgrund durch Strömung und Wellendynamik in unzulässige Positionen an Gründungsbauwerken verschieben. Sie können somit nicht präzise an den günstigsten Positionen an den Gründungsstrukturen platziert werden. Weiterhin bieten solche Fallen selbst kein attraktives Besiedlungshabitat. Zudem müssen die Fallen extra mit Markierungsleinen und -bojen versehen werden, welche im Einsatz an Offshore-Bauwerken abreißen oder zu anderen Problemen führen können.

### STAND DER TECHNIK

Sowohl als Habitat als auch als Fangvorrichtung beispielsweise für Hummer einsetzbare so genannte "künstliche Riffe" sind z.B. aus der US 6186 702 B1 bekannt, die einfach auf dem Meeresboden ausgesetzt und bei Bedarf wieder eingeholt werden. Große Hälterungskästen, die über schräge Seilführungen von einer speziellen Plattform aus abgesenkt und wieder eingeholt werden, sind aus der US 5 596 947 bekannt. In der WO 2004/075633 A1 werden vertikal absenkbare Habitat- und Erntekästen in Stapelbauweise beschrieben.

In der DE 20310 089 U1, von der die vorliegende Erfindung als nächstliegendem Stand der Technik ausgeht, ist zur Ansiedelung und Erntung von Hartbodentieren im Bereich eines Pylons einer Windenergieanlage eine Netzeinrichtung vorgesehen, die über eine Seilwinde als Hebeeinrichtung abgesenkt und eingeholt werden kann. Dabei ist die Netzeinrichtung als für die Hartbodentiere relativ unattraktiver Korb ausgebildet, der einfach in das Wasser abgesenkt oder auf dem Meeresboden abgestellt wird. Zur beliebigen Positionierung dieser Netzeinrichtung ist ein den Pylon horizontal in einer Radialebene teilweise oder vollständig umfassendes Schienensystem vorgesehen, in das ein Gestell für die Seilwinde eingehakt wird. Bekannt ist somit ein horizontal verlaufendes Schienensystem zu beliebigen Positionierung einer Netzeinrichtung am Umfang des Pylons. Das Absenken und Einholen der Netzeinrichtung erfolgt ausschließlich über die Seilwinde in ungeführter Form in der freien Meeresströmung, sodass hier eine starke Abhängigkeit entsteht. Die ggfs. ausschwingende Netzeinrichtung kann dabei gefährdend in den Betriebsbereich des Bauwerks oder ggfs. vorhandener Serviceeinrichtungen hineingelangen. Eine präzise Positionierung der Netzfangeinrichtung ist nicht möglich. Aus der US 2006/0170 221 A1 ist es für denselben Gegenstand noch zusätzlich bekannt, ein spezielles, abnehmbares Fangsubstrat über eine elektrische Seilwinde direkt am Pylon abzusenken und einzuholen, sodass sich hier durch den Pylon selbst eine gewisse Führung ergibt. Diese wird jedoch nicht durch sichernde Elemente unterstützt, sodass auch hierbei Meeresströmungen störend angreifen und den Ernteprozess beeinträchtigen können.

Weiterhin ist aus der EP 1 466 523 A2 eine äußerst aufwändige Konstruktion zur beidseitigen Aberntung von mit beispielsweise Muscheln bewachsenen vertikalen Netzsubstraten bekannt. Hierbei werden zwei Ernterollbänder beiderseits des Netzsubstrats an einem vertikalen Schienensystem abgesenkt. Durch die Bandbewegung werden die angesiedelten Muscheln zur Wasseroberfläche transportiert. Das vertikale Schienensystem mit den Ernterollbändern ist seitlich an einem Schiff befestigt, das entsprechend über dem Substrat positioniert wird. Schließlich ist aus der GB 2 270 664 A noch ein vertikales Schienensystem mit einem verfahrbaren Schlitten zur Befestigung von Vorrichtungen bekannt, das von der Wasserlinie abwärts im Unterwasserbereich eines Pfeilers einer Steganlage angeordnet ist. Über einen Fender ist ein Boot mit dem Schienensystem verbindbar, sodass tiedenbedingte Höhenschwankungen des Bootes durch vertikales Verfahren des Fenders am Schienensystem ausgeglichen werden können.

### AUFGABENSTELLUNG

Ausgehend von der oben beschriebenen, gattungsgemäßen Vorrichtung zur Ansiedlung und Erntung von marinen Hartbodentieren im Bereich von Offshore-Bauwerken ist die **AUFGABE** für die vorliegende Erfindung darin zu sehen, eine verbesserte Vorrichtung anzugeben, die eine besonders präzise und sichere Aus- und Einbringung der Netzeinrichtung ermöglicht, ohne dabei von den Strömungsverhältnissen im Bauwerksbereich abhängig zu sein und ohne störend in den Betriebsbereich des Bauwerks einzugreifen. Dabei soll die Vorrichtung jedoch einfach und sicher zugänglich und handhabbar sein. Die erfindungsgemäße **LÖSUNG** für diese Aufgabe ist dem Hauptanspruch zu entnehmen. Vorteilhafte Weiterbildungen der Erfindung werden in den Unteransprüchen-aufgezeigt-und-im-Folgenden im Zusammenhang mit der Erfindung näher erläutert.

Die erfindungsgemäße Vorrichtung weist zumindest eine am Offshorebauwerk vertikal anordenbare Schieneneinrichtung auf, die über die Höhe des Unterwasserbereichs bis oberhalb der Wasserlinie erstreckbar ist. Oberhalb der Wasserlinie kann die Vorrichtung leicht von einem Boot oder einer am Pylon befestigten Plattform aus "trockenen Fußes" bedient werden, d.h. be- und entladen werden kann. Beladen wird die Schieneneinrichtung erfindungsgemäß mit einem Habitatschlitten mit einem Habitat- und Fangkorb als Netzeinrichtung und temporär mit einem Bergeschlitten. Sowohl der Habitatschlitten als auch der Bergeschlitten weisen jeweils einen Grundkörper und zumindest einen Laufkörper zu ihrer lösbaren Kopplung mit und Verfahrbarkeit auf der Schieneneinrichtung auf. Weiterhin verfügen die Schlitten über Mittel zur lösbaren Kopplung miteinander. Schließlich ist noch der Bergeschlitten lösbar mit der Hebeeinrichtung koppelbar. Die Erfindung nutzt die unmittelbare Nähe zum Bauwerk, wodurch sich eine besonders gute Ausnutzung und Anreicherung des vorhandenen Aufwuchses ergibt. Weiterhin wird durch die direkte Anordnung der Vorrichtung am Bauwerk (Bautiefe der Schieneneinrichtung in einem Bereich von 20 cm) dessen Strömungswiderstand nicht bedeutsam erhöht und der Arbeitsbereich nicht beeinträchtigt. Durch die ortfeste Konstruktion der Schieneneinrichtung wird eine besonders ortspräzise Ausbringung, Lagerung und Einholung der Schlitten ermöglicht.

Bei der Erfindung ist zumindest eine vertikal verlaufende Schieneneinrichtung im gesamten Unterwasserbereich beispielsweise eines Pylons vorgesehen, auf der in genau definierter Weise und ohne eine Beeinflussung durch auftretende Strömungen der Habitatschlitten bis auf den Meeresgrund absenkbar ist. Dazu wird der Habitatschlitten oberhalb der Wasserlinie mit seinen Laufkörpern in das Schienensystem über das Ende der Schienen oder über Aussparungen in den Schienen eingekoppelt und einfach freigegeben. Das Absinken bis auf den Meeresgrund erfolgt entlang der Schienen durch das Abtriebsgewicht des Habitatschlittens. Am Meeresgrund kann der Habitatschlitten dann beliebig lange im Schienensystem belassen werden und dient dort der Ansiedelung von Hartbodentieren. Ein Abdriften des Habitatschlittens in der Strömung oder Wellendynamik oder eine Beeinträchtigung des Betriebsbereichs des Offshore-Bauwerks durch abstehende oder abdriftende Teile oder Taue sind bei der Erfindung sicher vermieden. Die Bergung des Habitatschlittens erfolgt zu einem beliebigen Zeitpunkt durch den Einsatz des Bergeschlittens. Dazu wird dieser auch oberhalb der Wasserlinie mit seinen Laufkörpern mit der Schieneneinrichtung, aber auch mit der Hebeeinrichtung gekoppelt. Anschließend wird der Bergeschlitten freigegeben und sinkt durch seine Abtriebskraft in Richtung Meeresboden, wobei die Hebeeinrichtung entsprechend Seil nachgibt, um das Absinken nicht zu behindern. Beim Absinken trifft der Bergeschlitten dann auf den bereits abgesenkten Habitatschlitten und koppelt sich über eine entsprechende Vorrichtung fest, aber lösbar mit ihm. Über die Hebeeinrichtung wird dann der Verbund von Bergschlitten und Habitatschlitten gemeinsam eingeholt. Dabei kann der Verbund so weit aus dem Wasser gezogen werden, dass sich auch der Habitatschlitten unterhalb des Bergeschlittens oberhalb der Wasserlinie befindet und wiederum trockenen Fußes geborgen, d.h. aus der Schieneneinrichtung entkoppelt bzw. abgesammelt werden kann.

Die erfindungsgemäße Vorrichtung arbeitet als Zusatzhabitat an marinen Offshore-Bauwerken wie beispielsweise den Pfeilern von Windkraftanlagen. Gleichzeitig dient sie als ortsfeste Falle und Ernteeinrichtung, die ohne Beköderung an diesen Ballungspunkten befischbarer Tierarten für wirtschaftliche Zwecke genutzt werden kann. Befischt werden können mit der erfindungsgemäßen Vorrichtung alle Tiere, die im zusätzlich geschaffenen Habitat siedeln. Außerdem können - je nach Ausführung der erfindungsgemäßen Vorrichtung - auch vorkommende Tiere in nächster Umgebung der Vorrichtung gefangen werden, beispielsweise im Zwischenraum zwischen der Vorrichtung und dem Bauwerk oder am Grund nahe der Vorrichtung. Die bereits vorhandenen oder zu errichtenden Bauwerke können durch Anwendung der Erfindung zusätzlich sekundär wirtschaftlich genutzt werden, was die in der Regel oft kostenintensive Umsetzung der primären Wirtschaftsleistung - oftmals Energiegewinnung - erheblich unterstützt (multifunktionale Nutzung von Offshore-Bauwerken). Die Erntetiere leben auf dem mit der Erfindung künstlich geschaffenen Zusatzsubstrat, ohne das sie in Weichbodengebieten - in denen Offshore-Bauwerke in der Regel errichtet werden - nur vereinzelt vorkommen würden. Abgeerntet wird nur ein Tier-Überschuss im Teilbereich der Unterwasserkonstruktion. Dabei bieten die Offshore-Bauwerke mit ihrer natürlichen Fouling-Gemeinschaft ausreichend Nahrung für die siedelnden Erntetiere. Eine zusätzliche Fütterung ist nicht erforderlich, kann aber durchaus durchgeführt werden. Durch die Teilbefischung und die stabilen Gegebenheiten bezüglich Nahrung und Lebensraum im befischten Gebiet wird im Verbund mit einem nachhaltigen Bewirtschaftungskonzept eine stabile Neurekrutierung der Tierarten angestoßen. Die zusätzliche Ansiedelungsfläche des Habitat- und Fangkorbes des Habitatschlittens dient dabei als Siedlungsraum sowohl für die Erntetiere als auch für deren Nahrung bzw. Nährtiere. Vor allem die präzise Ausbringbarkeit der erfindungsgemäßen Vorrichtung gewährleistet hierbei die nachhaltige Bewirtschaftung und Pflege des lokalen Tierbestandes. Außerdem kann die erfindungsgemäße Vorrichtung dem Arten- und Naturschutz dienen, wenn nach dem Ausbringen eine Befischung (Erntung) nur beschränkt durchgeführt wird oder sogar komplett auf sie verzichtet wird.

Für die Installation der erfindungsgemäßen Vorrichtung muss kein eigenes Bauwerk errichtet werden. Die geplanten Bauwerke müssen lediglich vor deren Offshore-Errichtung im Meer einfachste, nicht die Tragfähigkeit beeinflussende Anbauten - in Form der äußerst einfach gestaltbaren Schieneneinrichtung - erhalten. Dabei können die Schieneneinrichtung und der Bergeschlitten bei der Erfindung auch für andere Komponenten als für die Netzeinrichtung nutzbringend eingesetzt werden, beispielsweise zum Absenken von ferngesteuerten Kameras, Reinigungsbürsten, Hebesystemen, Taucherausrüstungen oder anderer Lasten oder Materialien, wobei ein bauwerkseigenes Kransystem genutzt werden kann. Schließlich kann die Schieneneinrichtung auch als Steighilfe für Taucher genutzt werden. Mit der Erfindung wird somit eine komplette Habitat-Fallen-Lösung angeboten, die für die gewerbliche Pflege und Vermehrung wirtschaftlich nutzbarer Tiere und deren nachhaltige Erntung in vorzugsweise großen Offshore-Bauwerksgruppen, wie Windparks, besonders nutzbringend eingesetzt werden kann. In einigen Fällen kann es daneben aber auch durchaus sinnvoll sein, eigene Bauwerke für die erfindungsgemäße Vorrichtung zu errichten oder bereits bestehende Offshore-Bauwerke nachträglich mit der Schieneneinrichtung auszurüsten. Das Schienen-Schlitten-System kann darüber hinaus zur Pflege, Wartung und Inspektion von Offshore-Bauwerken eingesetzt werden. Vorteilhaft ist, dass der Bergschlitten nur ein Mal oder in geringen Stückzahlen vorgehalten werden muss, damit alle Schienen genutzt werden und die unterschiedlichsten Aufgaben ausgeführt werden können.

Die ortspräzise Ausbringung der Netzeinrichtung erfolgt über den Habitatschlitten und die Schieneneinrichtung, die an der Gründungsstruktur des Offshore-Bauwerks vertikal angeordnet ist. Dabei kann nur eine einzelne vertikale Schieneneinrichtung am Umfang des Bauwerks vorgesehen sein. Insbesondere bei runden Bauwerken, wie Windkraft-Pylonen, können aber auch mehrere vertikale Schieneneinrichtungen (und entsprechend mehrere Habitatschlitten, aber beispielsweise nur ein Bergeschlitten, der zur Bergung aller Habitatschlitten genutzt wird) am Umfang angeordnet sein. Beispielsweise können vier, paarweise diametral gegenüberliegende Schieneneinrichtungen vorgesehen sein. Durch die ortspräzise Ausbringung der Habitat- und Fangkörbe über die an den Schieneneinrichtungen geführten Habitatschlitten ist auch bei einer eng benachbarten Anordnung von mehreren Schieneneinrichtungen sicher gewährleistet, dass sich die einzelnen Komponenten nicht gegenseitig behindern oder beeinträchtigen.

Am Schienensystem wird der Grundkörper des Habitatschlittens beispielsweise von einem Schiff aus vom oberen Ende der Schieneneinrichtung her oder über entsprechende Aussparungen im Überwasserbereich der Schieneneinrichtung eingeführt. Vorteilhaft sind dabei die Schieneneinrichtung mit einer T-förmigen Führungsschiene und der Laufkörper von Habitatschlitten und Bergeschlitten mit einer T-förmigen Führungsnut ausgebildet. Dabei kann die T-förmige Führungsschiene in einfacher Weise am Bauwerk beispielsweise festgeschraubt oder in einer vorteilhaften Ausführungsform als Stahlschiene auch einfach angeschweißt sein. Die Laufkörper greifen mit ihrer T-förmigen Führungsnut über die T-förmige Führungsschiene, sodass eine Führung in vertikaler - in Richtung der Schiene - und horizontaler Richtung - orthogonal zur Schiene - sicher gewährleistet ist. Um ein gutes Gleiten der T-förmigen Führungsnut über die T-förmige Führungsschiene zu gewährleisten, können in der T-förmigen führungsnut noch Laufrollen vorgesehen sein, die von hinten auf der T-förmigen Führungsschiene abrollen. Um ein seitliches Verkanten des Habitatschlittens auf der T-förmigen Führungsschiene zu verhindern, sind weiterhin Abstandshalter an Habitatschlitten und Bergeschlitten zur seitlichen Stabilisierung vorgesehen. Mit den Abstandshaltern stützen sich Habitat- und Bergeschlitten rechts und links von der vertikalen Führungsschiene direkt am Bauwerk ab.

Durch die T-förmige Ausbildung von Führungsschiene und Führungsnut ergibt sich bereits eine zuverlässige Sicherung gegen das Abheben der Schlitten von der Schieneneinrichtung während des Absenkens oder Einholens. Um ein Verkanten auch in horizontaler Richtung durch geringfügiges (auftriebs- oder strömungsbedingtes) Abheben der Schlitten sicher zu verhindern, können vorteilhaft zumindest eine am Offshore-Bauwerk abstützbare Führungsrolle und Gewichte mit einer horizontal auf das Offshore-Bauwerk richtbaren Kraftwirkung (aufgebracht über eine drehbar gelagerte Hebelanordnung) zumindest am Bergeschlitten vorgesehen sein. Durch die Gewichte wird der Bergeschlitten über die Hebelanordnung und eine Führungsrolle gegen das Bauwerk gedrückt. Durch deren Rollenausbildung ist trotzdem eine leichte Verfahrbarkeit des Bergeschlittens am Bauwerk möglich. Da das Absenken auch des Bergeschlittens ausschließlich durch seine Abtriebskraft erfolgt, kann dieser Vorgang durch weitere Gewichte am Bergeschlitten mit einer vertikal nach unten gerichteten-Kraftwirkung-b-eschleunigt werden, sodass eine besonders schnelle Bergung des Habitatschlittens möglich ist. Alle vorgenannten Maßnahmen sind in gleicher Weise auch am Habitatschlitten durchführbar. Auch dieser kann über eine zusätzliche, gewichtsbelastete Führung und zusätzliche Abtriebsgewichte verfügen.

Bevorzugt weist der Bergeschlitten an seinem unteren Ende einen Aufnahmeflansch auf. An diesem Flansch können unterschiedliche Werkzeuge angebaut werden, die unterschiedlichen Funktionen dienen. Beispielsweise kann eine Unterwasser-Videokamera angebaut werden, wenn der Bergeschlitten nicht zum Einholen des Habitatschlittens, sondern zur Untenivasserbeobachtung der Tiere oder zur Inspektion des Bauwerks eingesetzt wird. Für das Einholen des Habitatschlittens kann bevorzugt eine feste Anordnung einer Bergeklammer am Aufnahmeflansch des Bergeschlittens und eines Bergedorns am oberen Ende des Habitatschlittens vorgesehen sein. Dabei rastet die Bergeklammer beim vertikalen Absenken des Bergeschlittens am Bergedorn des Habitatschlittens fest, aber lösbar ein, sodass beim Einholen des Bergeschlittens mittels der Hebeeinrichtung der Habitatschlitten miteingeholt wird. Bei der Hebeeinrichtung für den Bergeschlitten kann es sich bevorzugt um eine handbetriebene oder elektrische Seilwinde handeln, die entweder am Offshore-Bauwerk direkt oder an einer Arbeitsplattform oder an einem Serviceschiff befestigt ist.

Bereits weiter oben wurde ausgeführt, dass der Habitatschlitten der Vergrößerung des Habitats für Hartbodentiere dient, die sich ansonsten in den Weichbodengebieten der meisten Offshore-Bauwerke nicht oder nur vereinzelt aufhalten würden. Um diese Vergrößerung zu maximieren, ist es vorteilhaft, wenn der Habitat- und Fangkorb des Habitatschlittens mit einer ausklappbaren Habitat- und Fangklappe ausgerüstet ist. Der Habitat- und Fangkorb kann bereits mit der geöffneten Habitat- und Fangklappe abgesenkt werden. Die Habitat- und Fangklappe senkt sich dann in der unteren Position des Fangkorbes noch weiter und setzt unter einem Winkel auf dem Meeresboden auf oder liegt horizontal auf dem Meeresboden. Durch den direkten Kontakt der Habitat- und Fangklappe mit dem Meeresboden können dort laufende Tiere, insbesondere Hummer und Krebse, die Habitat- und Fangklappe und den Habitat- und Fangkorb besonders einfach erreichen. Um eine maximale Erntung dieser Tiere beim Einholen des Fangkorbes bzw. des Habitatschlittens zu erreichen, ist es sinnvoll, zuvor die Habitat- und Fangklappe zu schließen. Dazu können bei der Vorrichtung nach der Erfindung eine lösbare Anordnung eines weiteren Bergedorns auf einem Aufnahmestift auf dem Bergedorn am Habitatschlitten und zumindest ein Klappseil, das mit seinem einen Ende am oberen Ende der Habitat- und Fangklappe befestigt ist, vorgesehen sein. Zum besseren Schließen können auch zwei zueinander beabstandete Klappseile am oberen Ende der Habitat- und Fangklappe vorgesehen sein. Jedes Klappseil ist mit seinem anderen Ende an dem weiteren Bergdorn befestigt und wird durch ein entsprechend angeordnetes Auge am oberen Ende des Habitatschlittens geführt. Rastet nun die Bergeklammer am Bergeschlitten in den weiteren Bergedorn ein, wird dieser beim Einholen von dem Aufnahmestift abgezogen und zieht die Klappseile durch die Augen hoch. Dabei sind die Augen so an der Habitat- und Fangklappe angeordnet, dass sich beim Einholen des Habitatschlittens kein Kippmoment ergibt. Beim Einholen wird die Habitat- und Fangklappe geschlossen und der geschlossene Habitatschlitten am Klappseil hochgezogen. Ein solcher Schließmechanismus kann prinzipiell auch nur mit einem lösbaren Bergedorn, der auf einem einfachen Aufnahmestift sitzt, ausgeführt werden. Durch den weiteren Bergedorn ist aber eine doppelte Bergungsmöglichkeit des Habitatschlittens gegeben. Für die Fälle beispielsweise, dass der weitere Bergedorn von der Bergeklammer abrutscht oder durch äußere Einwirkungen (z. B. umher treibende Gegenstände) entfernt wurde oder dass die Klappseile gerissen sind, öffnet sich zwar wieder die Habitatklappe, der gesamte Habitatschlitten kann aber trotzdem durch neuerliches Einrasten der Bergeklammer nunmehr direkt am fest montierten Bergedorn des Habitatschlittens sicher geborgen werden.

Die Habitat- und Fangklappe dient der Vergrößerung der Habitatfläche und damit der Verbesserung der Ernteausbeute. Um diese noch weiter zu steigern, kann der Habitat- und Fangkorb des Habitatschlittens vorteilhaft mit attraktiven Anbauten für die Ansiedelung durch die Hartbodentiere, beispielsweise geschlossenen oder halbierten Rohrstücken, und/oder zusätzlichen schwenkbaren kleinen Klappkörben am unteren Ende des Habitat- und Fangkorbes versehen sein. Durch die Klappkörbe, die beim Einholen des Habitatschlittens in die horizontale Lage schwenken, können auch aus dem Habitat- und Fangkorb herausfallende Tiere und Tiere aus dem Zwischenraum zwischen Habitat- und Fangkorb und Bauwerk mitgeerntet werden. Weiterhin können zur Verbesserung der Positionierungsstabilität des Habitat- und Fangkorbes und der Habitat- und Fangklappe Eindringdorne am unteren Ende des Habitat- und Fangkorbes und/oder am oberen Ende der Habitat- und Fangklappe vorgesehen sein. Beim Aufsetzen des Habitatschlittens und der Habitat- und Fangklappe auf dem Meeresboden dringen dann diese Dorne stabilisierend in den weichen Meeresboden ein. Beim Einholen des Habitatschlittens werden sie einfach wieder aus dem weichen Meeresboden herausgezogen.

Weiterhin kann der Habitat- und Fangkorb des Habitatschlittens in seinem horizontalen Querschnitt gerade, gekrümmt oder gewinkelt ausgebildet sein.

Dadurch kann er optimal an die Oberflächenform des Offshore-Bauwerks angepasst werden. Insbesondere bei den in der Regel runden Pylonen von Windkraftanlagen bietet sich eine gekrümmte Form an. Schließlich kann vorteilhaft noch eine Bürsteneinrichtung am Habitatschlitten über dessen Breite vorgesehen sein, wobei das Offshore-Bauwerk von der Bürsteneinrichtung berührbar ist. Beim Hieven des Habitatschlittens werden so im Zwischenraum siedelnde Tiere abgebürstet. Diese können ggfs. in den unteren Fangkörben am Habitatschlitten mitgeerntet werden. Ansonsten sinken sie zu Boden und dienen dort den siedelnden Tieren als Nahrung. Gleiches gilt für angesiedelte Fauna, sodass das Bauwerk auf seiner Oberfläche im Bereich der Vorrichtung nach der Erfindung gut gereinigt ist. Weitere Ausführungsdetails der Vorrichtung nach der Erfindung sind den nachfolgenden beschriebenen Ausführungsbeispielen zu entnehmen.

### AUSFÜHRUNGSBEISPIELE

Die Vorrichtung zur Ansiedelung und Erntung von marinen Hartbodentieren im Unterwasserbereich von bodengegründeten Offshore-Bauwerken mit zumindest einer Schieneneinrichtung zur ortswählbaren Aufnahme einer mittels einer Hebeeinrichtung vertikal verfahrbaren Netzeinrichtung für die Hartbodentiere nach der Erfindung wird im Folgenden anhand der schematischen, nicht maßstabsgerechten Figuren noch weitergehend erläutert. Dabei zeigt die
- **FIGUR 1**: eine Seitenansicht des Bergeschlittens,
- **FIGUR 2**: einen Querschnitt des Bergeschlittens,
- **FIGUR 3**: eine Seitenansicht des abgesenkten Habitatschlittens mit geöffneter Habitat- und Fangklappe,
- **FIGUR 4**: eine perspektivische Ansicht des abgesenkten Habitatschlittens mit geöffneter Habitat- und Fangklappe und
- **FIGUR 5**: eine Seitenansicht des Habitatschlittens mit geschlossener Habitat- und Fangklappe während des Einholens.

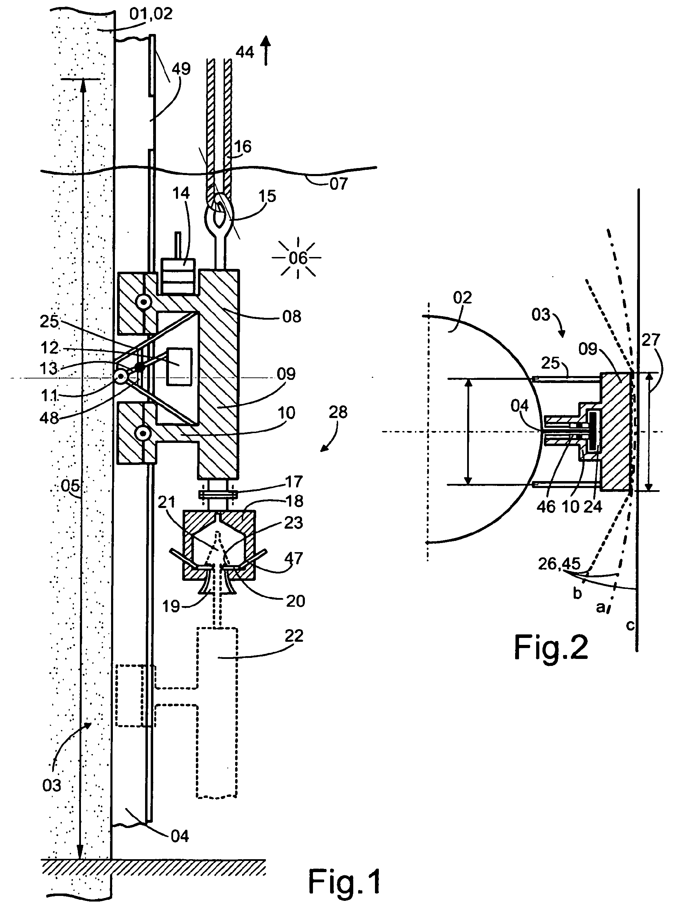

In der **FIGUR 1** ist ein Offshore-Bauwerk **01** in Form eines Pylons **02** einer Windkraftanlage mit einer vertikal angeordneten Schieneneinrichtung **03** dargestellt. Dabei ist die Schieneneinrichtung **03** als einfache T-förmige Führungsschiene **04** ausgebildet und erstreckt sich über die Höhe **05** des Unterwasserbereichs **06** bis oberhalb der Wasserlinie **07**. Auf der Schieneneinrichtung **03** befindet sich ein vertikal verfahrbarer Bergeschlitten **08,** der aus einem Grundkörper **09** und einem Laufkörper **10** besteht. Der Bergeschlitten **08** wird im gezeigten Ausführungsbeispiel im Bereich von Aussparungen **49** mit seinem Laufkörper **10** auf die Führungsschiene **04** gesetzt. Um ein Einfädeln in verschiedenen Höhen zu ermöglichen, können mehrere Aussparungen **46** entlang der Führungsschiene **04** oberhalb der Wasserlinie **07** vorgesehen sein. Ein Aufsetzen des Bergeschlittens **08** auf die Führungsschiene **04** an deren Ende ist ebenfalls möglich, wenn das Ende beispielsweise von einem Boot aus erreichbar ist. Der Laufkörper **10** rollt mittels Laufrollen **46** auf der Führungsschiene **04** ab. Zusätzlich weist der dargestellte Bergeschlitten **08** eine sich am Offshore-Bauwerk **01** abstützende Führungsrolle **11** und Gewichte **12** mit einer über einen drehbaren Hebelarm **13** horizontal auf das Offshore-Bauwerk 01 wirkenden Kraftwirkung am Bergeschlitten **08** auf, die ein Abheben des Bergeschlittens **08** aufgrund von Auftrieb, Strömung und Wellendynamik sicher verhindert. Dabei ist der Hebelarm **13** drehbar an einer Querachse **48** im Abstandshalter **25** gelagert. Weitere Gewichte **14** sind zur Vergrößerung der Abtriebsgeschwindigkeit des Bergeschlittens **08** ebenfalls vorgesehen (Habitatschlitten **22** analog).

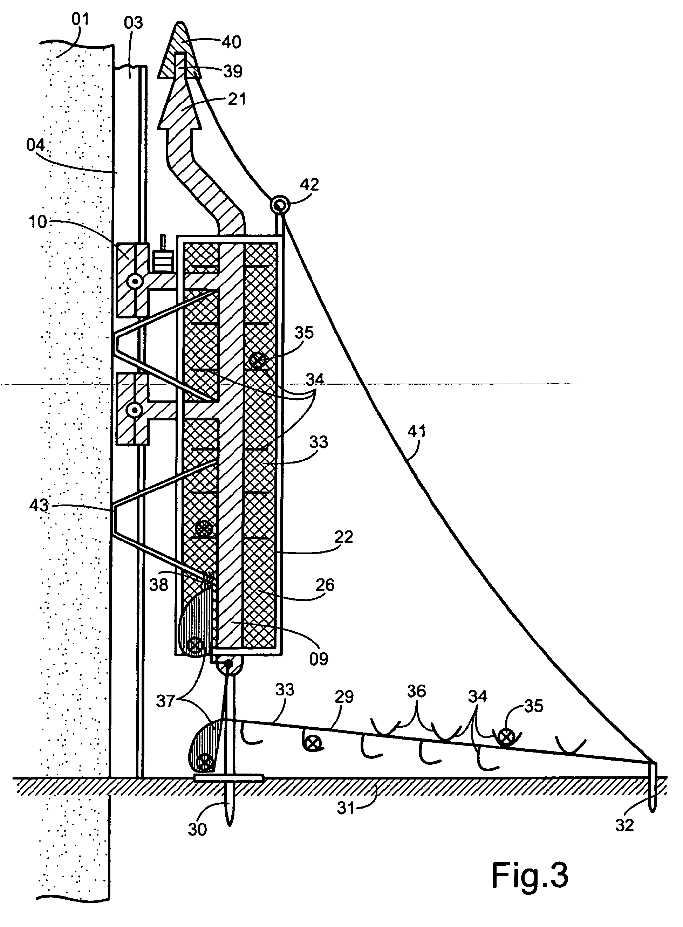

An seinem oberen Ende weist der Bergeschlitten **08** eine Öse **15** zur Befestigung eines Bergeseils **16** auf, das dem Einholen des Bergeschlittens **08** über eine Hebeeinrichtung **44** dient. An seinem unteren Ende weist der Bergeschlitten **08** einen Aufnahmeflansch **17** zur Befestigung unterschiedlicher Werkzeuge auf. In der dargestellten Ausführungsform ist an dem Aufnahmeflansch **17** eine Bergeklammer **18** angeordnet (Detaildarstellung im Schnitt). Die Bergeklammer **18** weist einen Einführbereich **19** und im gezeigten Ausführungsbeispiel Klappsegmente **20** mit einem Öffnungshebel **46** auf, die der festen, aber lösbaren Aufnahme eines Bergedorns **21** dienen. Dieser Bergedorn **21** ist in der **FIGUR 1** gestrichelt angedeutet und gehört zu einem Habitatschlitten **22**, der in **FIGUR 3** näher erläutert wird. Zu erkennen ist in der **FIGUR 1**, wie der Bergedorn **21** mit seinem Absatz **23** auf den Klappsegmenten **20** aufliegt, nachdem er durch Absenken des Bergeschlittens 08 bzw. der Bergeklammer **18** durch den Einführbereich **19** im Inneren der Bergeklammer **18** aufgenommen wurde und die Klappsegmente **20** angehoben hat. Eine Lösung des Bergedorns **21** aus der Bergeklammer **18** erfolgt durch einfaches Aufhebeln der unbelasteten Klappsegmente **20** mit einem Öffnungshebel **47**.

In der **FIGUR 2** ist ein Querschnitt durch den Pylon **02**, die Schieneneinrichtung **03**, den Grundkörper **09** und den Laufkörper **10** dargestellt. Grundsätzlich weisen sowohl der Bergeschlitten **08** als auch der Habitatschlitten **22** einen Grundkörper **09** und einen Laufkörper **10** auf, die vorteilhaft identisch aufgebaut sein können, aber nicht zwingend sein müssen. Im Querschnitt ist zu erkennen, dass die Schieneneinrichtung **03** von der T-förmigen Führungsschiene **04** gebildet wird. Hierbei kann es sich beispielsweise um eine einfache Stahlschiene handeln, die am Pylon **02** festgeschweißt ist. Der Grundkörper **09** weist einen Laufkörper **10** mit einer T-förmigen Führungsnut **24** auf, die über die T-förmige Führungsschiene **04** greift. Es ergibt sich eine sichere axiale und eine gute radiale Führung. Um diese noch zu verbessern, weist der Grundkörper **09** zusätzlich Abstandshalter **25** zur seitlichen Stabilisierung des Grundkörpers **09** auf. Diese sind im gezeigten Ausführungsbeispiel trapezförmig aus einem Rohr geformt. Die oben erläuterte Anordnung mit Hebel **13** und Gewicht **12** zum Andrücken von Bergeschlitten **08** oder Habitatschlitten **22** an das Bauwerk **01**, **02** ist in **FIGUR 2** nicht weiter dargestellt. Grundsätzlich befinden sich zwei derartige Anordnungen rechts und links an Bergeschlitten **08** oder Habitatschlitten **22**. Gelagert werden die drehbaren Hebel **13** auf einer zwischen den Querachsen **48** angeordneten Längsachse zwischen den Abstandshaltern **25**.

Weiterhin ist in der **FIGUR 2** ein Habitat- und Fangkorb **26** als Netzeinrichtung **45** gestrichelt dargestellt, um dessen unterschiedliche mögliche Formungen aufzuzeigen. Im Falle des runden Pylons **02** bietet sich eine entsprechend gekrümmte Form (Variante a) an. Alternativ kann sie auch eckig (Variante b) sein. Im Falle von planen Oberflächen der Offshore-Bauwerke **01** kann der Habitat- und Fangkorb **26** auch entsprechend eben ausgebildet sein (Variante c). Dargestellt ist auch die Breite **27** des Grundkörpers **09** des Habitat- und Fangkorbes **26**, die seine Stabilität und Effektivität bezüglich Aufzucht und Erntung der Hartbodentiere beeinflusst.

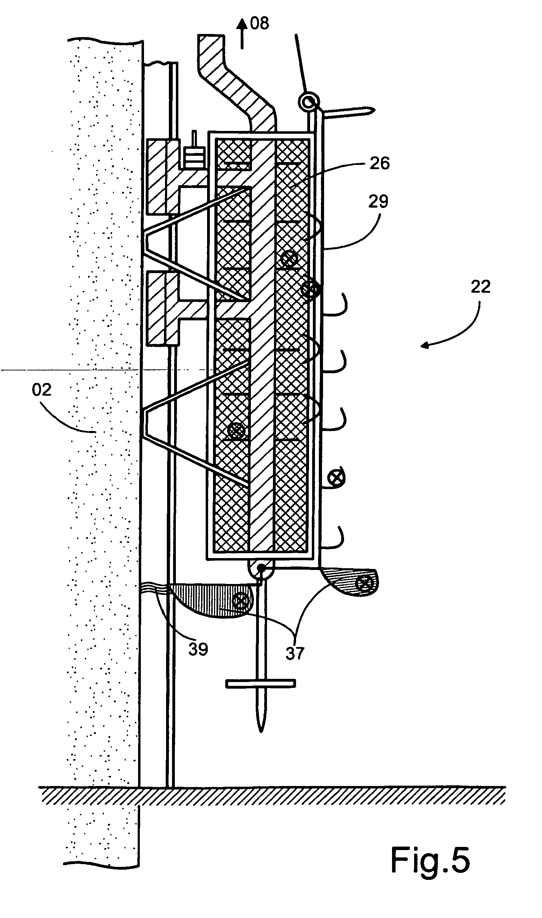

Die **FIGUR 3** zeigt in der Seitenansicht den abgesenkten Habitatschlitten **22**, der zusammen mit der Schieneneinrichtung **03** und dem Bergeschlitten **08** die Hauptkomponenten der Vorrichtung **28** nach der Erfindung bildet. Dargestellt sind der Grundkörper **09** und der Laufkörper **10** des Habitatschlittens **22**, wobei der Laufkörper **10** in die T-förmige Führungsschiene **04** der vertikalen Schieneneinrichtung **03** eingreift. Der Grundkörper **09** des Habitatschlittens **22** trägt den Habitat- und Fangkorb **26**, der eine Habitat- und Fangklappe **29** aufweist, die im dargestellten Zustand geöffnet ist. Der Habitat- und Fangkorb **26** ist unter Aufrechterhaltung der Kopplung mit der Schieneneinrichtung **03** maximal abgesenkt und mit einem Eindringdorn **30** in den Meeresboden **31** eingedrungen. Die Habitat- und Fangklappe **29** ist maximal geöffnet und ebenfalls mit einem weiteren Eindringdorn **32** im Meeresboden **31** verankert. Auf diese Weise sind Habitat- und Fangkorb **26** und Habitat- und Fangklappe **29** gut gegen Verrutschen durch angreifende Meeresströmungen gesichert. Habitat- und Fangkorb **26** und Habitat- und Fangklappe **29** weisen Netze **33** und verschiedene Anbauten **34** zur effektiven Erntung und Ansiedelung von marinen Hartbodentieren **35** auf. Die Anbauten **34** befinden sich auf beiden Seiten des Grundkörpers **09** und der Habitat- und Fangklappe **29**. Sie können bekannte Formen aufweisen, bevorzugt kann es sich bei den Anbauten **34** um Röhren oder Halbröhren **36** handeln. Weiterhin sind kleine Klappkörbe **37** vorgesehen, die der zusätzlichen Erntung bei Einholen des Habitatschlittens **22** dienen. Diese Klappkörbe **37** sind im gewählten Ausführungsbeispiel mit der Habitat- und Fangklappe **29** verbunden und werden mit deren Schließen gleichzeitig verschwenkt. Dabei weist ein Klappkorb **37** noch eine Bürsteneinrichtung **38** auf, die der Säuberung und Abstreifung von Tieren und Pflanzen am Pylon **02** während der Einholens dient (vergleiche auch **FIGUR 5**).

Zum Einholen weist der Habitatschlitten **22** am oberen Ende seines Grundkörpers **09** den festen Bergedorn **21** auf. Dieser verfügt über einen Aufnahmestift **39**, auf dem ein weiterer Bergedorn **40** lösbar aufsitzt. Mit dem weiteren Bergedorn **40** sind zwei Klappseile **41** (vergleiche **Figur 5**) verbunden, die jeweils durch ein Auge **42** am oberen Ende des Habitat- und Fangkorbes **26** geführt und mit dem oberen Ende der Habitat- und Fangklappe **29** fest verbunden sind. Beim Absenken greift die Bergeklammer **18** des Bergeschlittens **08** über den weiteren Bergdorn **40** und zieht diesen beim Einholen des Bergschlittens **08** von dem Aufnahmestift **39** herunter. Durch das Hochziehen der Klappseile **41** wird zunächst die Habitat- und Fangklappe **29** geschlossen (Pfeil mit gestrichelt straff dargestelltem Klappseil **41**) und anschließend der Habitatschlitten **22** hochgezogen. Sollte der weitere Bergedorn **40** aus der Bergeklammer **18** herausrutschen oder anderweitig entfernt werden oder sollten die Klappseile **41** reißen, kann der Habitatschlitten **22** trotzdem durch erneutes Einhaken der Bergeklammer **18** nunmehr über den festen Bergedorn **21** sicher geborgen werden. Die sich dann wieder öffnende Habitat- und Fangklappe **29** lässt zwar einen Teilfang wieder frei, behindert aber den Bergevorgang nicht weiter. In der **Figur 3** ist weiterhin ein weiterer Abstandshalter **43** zur Stabilisierung des Habitatschlittens **22** beim Absenken und Einholen dargestellt.

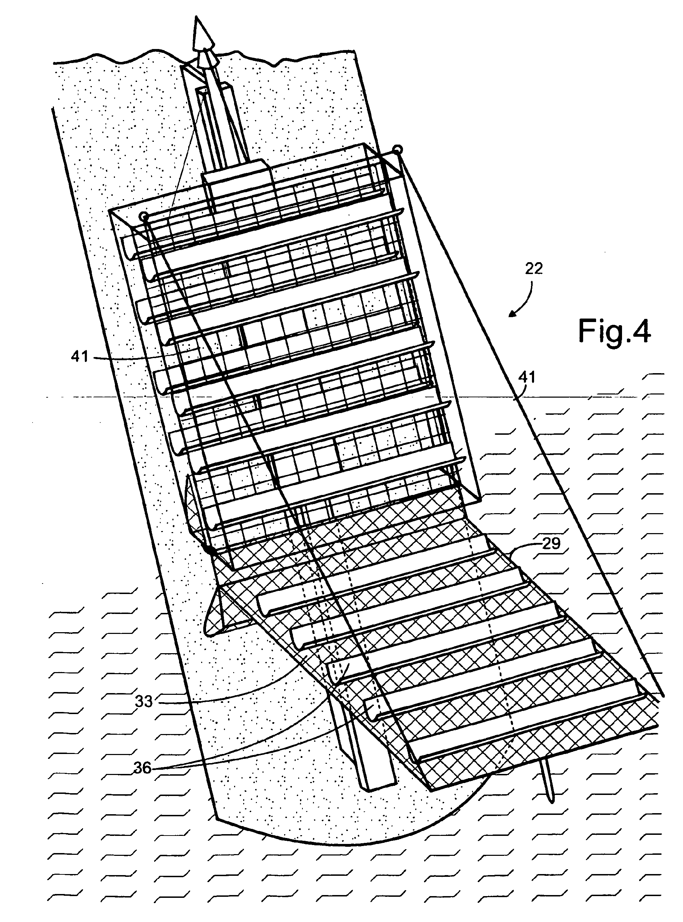

Die **FIGUR 4** zeigt den abgesenkten, geöffneten Habitatschlitten **22** gemäß **FIGUR 3** in der perspektivischen Ansicht, entsprechende Bezugszeichen und Erläuterungen sind der **FIGUR 3** zu entnehmen. Deutlich zu erkennen sind in der **FIGUR 4** die beiden Klappseile **41** am oberen Ende der Habitat- und Fangklappe **29** und die Halbröhren **36** auf dem Netz **33**.

Die **FIGUR 5** schließlich zeigt den geschlossenen Habitatschlitten **22** beim Einholen durch den Bergschlitten **08**, entsprechende Bezugszeichen und Erläuterungen sind wiederum der **FIGUR 3** zu entnehmen. Gut zu erkennen sind in dieser Darstellung der geschlossene Habitat- und Fangkorb **26** mit der hochgezogenen Habitat- und Fangklappe **29** und die dadurch in die Horizontale geklappten Klappkörbe **37** sowie die den Pylon **02** abbürstende Bürsteneinrichtung **39**.

### BEZUGSZEICHENLISTE

- **01**: Offshore-Bauwerk
- **02**: Pylon
- **03**: Schieneneinrichtung
- **04**: T-förmige Führungsschiene
- **05**: Höhe von 06
- **06**: Unterwasserbereich
- **07**: Wasserlinie
- **08**: Bergeschlitten
- **09**: Grundkörper
- **10**: Laufkörper
- **11**: Führungsrolle
- **12**: Gewicht
- **13**: Hebelarm
- **14**: weiteres Gewicht
- **15**: Öse
- **16**: Bergeseil
- **17**: Aufnahmeflansch
- **18**: Bergeklammer
- **19**: Einführbereich
- **20**: Klappsegment
- **21**: Bergedorn
- **22**: Habitatschlitten
- **23**: Absatz
- **24**: T-förmige Führungsnut
- **25**: Abstandshalter
- **26**: Habitat- und Fangkorb
- **27**: Breite von 09
- **28**: Vorrichtung zur Ansiedelung und Erntung von 35
- **29**: Habitat- und Fangklappe
- **30**: Eindringdorn
- **31**: Meeresboden
- **32**: weiterer Eindringdorn
- **33**: Netz
- **34**: Anbau
- **35**: marines Hartbodentier
- **36**: Halbröhre
- **37**: Klappkorb
- **38**: Bürsteneinrichtung
- **39**: Aufnahmestift
- **40**: weiterer Bergedorn
- **41**: Klappseil
- **42**: Auge
- **43**: weiterer Abstandshalter
- **44**: Hebeeinrichtung
- **45**: Netzeinrichtung
- **46**: Laufrolle
- **47**: Öffnungshebel
- **48**: Querachse
- **49**: Aussparung in 04

## Patentansprüche

1. Vorrichtung (28) zur Ansiedelung und Erntung von marinen Hartbodentieren (35) im Unterwasserbereich (06) von bodengegründeten Offshore-Bauwerken (01) mit zumindest einer Schieneneinrichtung (03) zur Aufnahme einer mittels einer Hebeeinrichtung (44) vertikal verfahrbaren Netzeinrichtung (45) für die Hartbodentiere (35),
**GEKENNZEICHNET DURCH**
eine vertikale Anordenbarkeit der zumindest einen Schieneneinrichtung (03) am Offshore-Bauwerk (01, 02) mit einer Erstreckbarkeit über die Höhe (05) des Unterwasserbereichs (06) bis oberhalb der Wasserlinie (07), **durch** einen Habitatschlitten (22) mit einem Habitat- und Fangkorb (26) als Netzeinrichtung (45) und einen Bergeschlitten (08), die jeweils einen Grundkörper (09) und einen Laufkörper (10) zur lösbaren Kopplung mit und Verfahrbarkeit auf der Schieneneinrichtung (03) und Mittel zur lösbaren Kopplung miteinander aufweisen, und **durch** eine lösbare Kopplung der Hebeeinrichtung (44) mit dem Bergeschlitten (08).

2. Vorrichtung (28) nach Anspruch 1,
**GEKENNZEICHNET DURCH**
mehrere Schieneneinrichtungen (03) nebeneinander und eine entsprechende Anzahl von Habitatschlitten (22), aber nur einen gemeinsamen Bergeschlitten (08).

3. Vorrichtung (28) nach Anspruch 1 oder 2,
**GEKENNZEICHNET DURCH**
eine Ausbildung der Schieneneinrichtung (03) mit einer T-förmigen Führuhgsschiene (04) und der Laufkörper (10) von Habitatschlitten (22) und Bergeschlitten (08) mit einer T-förmigen Führungsnut (24) und Abstandshalter (25) an Habitatschlitten (22) und Bergeschlitten (08) zur seitlichen Stabilisierung.

4. Vorrichtung (28) nach Anspruch 2,
**GEKENNZEICHNET DURCH**
Aussparungen (49) in der T-förmigen Führungsschiene (04) zum Aufsetzen von Bergeschlitten (08) und Habitatschlitten (22).

5. Vorrichtung (28) nach einem oder mehreren der vorangehenden Ansprüche, **GEKENNZEICHNET DURCH**
zumindest eine sich am Offshore-Bauwerk (01, 02) abstützbare Führungsrolle (11) und Gewichte (12) mit einer horizontal auf das Offshore-Bauwerk (01, 02) gerichteten Kraftwirkung am Bergeschlitten (08) und/oder Habitatschlitten (22).

6. Vorrichtung (28) nach einem oder mehreren der vorangehenden Ansprüche, **GEKENNZEICHNET DURCH**
weitere Gewichte (14) am Bergeschlitten (08) und/oder Habitatschlitten (22) mit einer vertikal nach unten gerichteten Kraftwirkung.

7. Vorrichtung (28) nach einem oder mehreren der vorangehenden Ansprüche, **GEKENNZEICHNET DURCH**
einen Aufnahmeflansch (17) am unteren Ende des Bergeschlittens (08) und eine feste Anordnung einer Bergeklammer (18) am Aufnahmeflansch (17) des Bergeschlittens (08) und eines festen Bergedorns (19) am oberen Ende des Habitatschlittens (22), wobei die Bergeklammer (18) beim vertikalen Absenken des Bergeschlittens (08) am Bergedorn (19) des Habitatschlittens (22) fest, aber lösbar einrastet.

8. Vorrichtung (28) nach einem oder mehreren der vorangehenden Ansprüche, **GEKENNZEICHNET DURCH**
eine Ausbildung des Habitat- und Fangkorbes (26) des Habitatschlittens (22) mit einer ausklappbaren Habitat- und Fangklappe (30).

9. Vorrichtung (28) nach Anspruch 7 und 8,
**GEKENNZEICHNET DURCH**
eine lösbare Anordnung eines weiteren Bergedorns (40) auf einem Aufnahmestift (39) auf dem Bergedorn (19) am Habitatschlitten (22) und zumindest ein Klappseil (41), das mit seinem einen Ende am oberen Ende der Habitat- und Fangklappe (30) und mit seinem anderen Ende unter Führung **durch** zumindest ein Auge (42) am oberen Ende des Habitatschlittens (22) am weiteren Bergedorn (40) befestigt ist, wobei die Bergeklammer (18) beim vertikalen Absenken des Bergeschlittens (08) am weiteren Bergedorn (40) einrastet.

10. Vorrichtung (28) nach einem oder mehreren der vorangehenden Ansprüche,
**GEKENNZEICHNET DURCH**
eine Ausbildung des Habitat- und Fangkorbes (26) des Habitatschlittens (22) mit attraktiven Anbauten (34) für die Ansiedelung von Hartbodentieren (35) und/oder zusätzlichen schwenkbaren Klappkörben (37) am unteren Ende des Habitat- und Fangkorbes (26).

11. Vorrichtung (28) nach einem oder mehreren der vorangehenden Ansprüche,
**GEKENNZEICHNET DURCH**
Vorsehen von Eindringdornen (30) am unteren Ende des Habitat- und Fangkorbes (26) und/oder von weiteren Eindringdornen (32) am oberen Ende der Habitat- und Fangklappe (30).

12. Vorrichtung (28) nach einem oder mehreren der vorangehenden Ansprüche,
**GEKENNZEICHNET DURCH**
eine gerade, gekrümmte oder gewinkelte Ausbildung des horizontalen Querschnitts des Habitat- und Fangkorb (26) des Habitatschlittens (22).

13. Vorrichtung (28) nach einem oder mehreren der vorangehenden Ansprüche,
**GEKENNZEICHNET DURCH**
eine Bürsteneinrichtung (38) am Habitatschlitten (22) über dessen Breite (27), wobei das Offshore-Bauwerk (01, 02) von der Bürsteneinrichtung (38) berührbar ist.

## Claims

1. A device (28) for establishing a colony of marine hard floor animals (35) and harvesting same in the underwater region (06) of offshore structures (01) having foundations in the floor, said device having at least one rail apparatus (03) for holding a net apparatus (45), which can be moved vertically by means of a lifting device (44), for the hard floor animals (35),
**CHARACTERISED BY**
the possibility of arranging the at least one rail apparatus (03) vertically on the offshore structure (01, 02) and extending it over the height (05) of the underwater region (06) to above the water line (07), by a habitat carriage (22) having a habitat and trap cage (26) as the net apparatus (45) and a retrieval carriage (08), which each have a base body (09) and a running body (10) for detachable coupling to and movability on the rail apparatus (03) and means for detachable coupling to each other, and by a detachable coupling of the lifting apparatus (44) to the retrieval carriage (08).

2. The device (28) according to Claim 1, **CHARACTERISED BY**
a plurality of rail apparatuses (03) adjacent to one another and a corresponding number of habitat carriages (22), but only one common retrieval carriage (08).

3. The device (28) according to Claim 1 or 2, **CHARACTERISED BY**
a configuration of the rail apparatus (03) with a T-shaped guide rail (04) and of the running bodies (10) of habitat carriages (22) and retrieval carriages (08) with a T-shaped guide groove (24) and spacers (25) on habitat carriages (22) and retrieval carriages (08) for lateral stabilisation.

4. The device (28) according to Claim 2, **CHARACTERISED BY**
cut-outs (49) in the T-shaped guide rail (04) for placing on retrieval carriages (08) and habitat carriages (22).

5. The device (28) according to one or more of the preceding claims,
**CHARACTERISED BY**
at least one guide roller (11), which can be supported on the offshore structure (01, 02), and weights (12) having a force effect directed horizontally onto the offshore structure (01, 02) on the retrieval carriage (08) and/or habitat carriage (22).

6. The device (28) according to one or more of the preceding claims,
**CHARACTERISED BY**
further weights (14) on the retrieval carriage (08) and/or habitat carriage (22) having a force effect directed vertically downwards.

7. The device (28) according to one or more of the preceding claims,
**CHARACTERISED BY**
a holding flange (17) at the lower end of the retrieval carriage (08) and a fixed arrangement of a retrieval clamp (18) on the holding flange (17) of the retrieval carriage (08) and of a fixed retrieval spike (19) at the upper end of the habitat carriage (22), wherein the retrieval clamp (18) locks firmly but detachably on the retrieval spike (19) of the habitat carriage (22) when the retrieval carriage (08) is vertically lowered.

8. The device (28) according to one or more of the preceding claims,
**CHARACTERISED BY**
a configuration of the habitat and trap cage (26) of the habitat carriage (22) with a fold-out habitat and trap flap (30).

9. The device (28) according to Claims 7 and 8, **CHARACTERISED BY**
a detachable arrangement of a further retrieval spike (40) on a holding bolt (39) on the retrieval spike (19) on the habitat carriage (22) and at least one flap cable (41), which is fastened at one end to the upper end of the habitat and trap flap (30) and at the other end, being guided through at least one eyelet (42), to the upper end of the habitat carriage (22) on the further retrieval spike (40), wherein the retrieval clamp (18) locks on the further retrieval spike (40) when the retrieval carriage (08) is vertically lowered.

10. The device (28) according to one or more of the preceding claims,
**CHARACTERISED BY**
a configuration of the habitat and trap cage (26) of the habitat carriage (22) with attractive attachments (34) for establishing a colony of hard floor animals (35) and/or additional pivotable folding cages (37) at the lower end of the habitat and trap cage (26).

11. The device (28) according to one or more of the preceding claims,
**CHARACTERISED BY**
the provision of penetrating spikes (30) at the lower end of the habitat and trap cage (26) and/or of further penetrating spikes (32) at the upper end of the habitat and trap flap (30).

12. The device (28) according to one or more of the preceding claims,
**CHARACTERISED BY**
a straight, curved or angled configuration of the horizontal cross section of the habitat and trap cage (26) of the habitat carriage (22).

13. The device (28) according to one or more of the preceding claims,
**CHARACTERISED BY**
a brush apparatus (38) on the habitat carriage (22) over the width (27) thereof, wherein the offshore structure (01, 02) can be touched by the brush apparatus (38).

## Revendications

1. Dispositif (28) pour la colonisation et la collecte d'animaux marins de sol dur (35) dans les zones sous-marines (06) de constructions offshore (01) fondées dans le sol, avec au moins un système de rails (03) destinée à accueillir un système de filet (45) déplaçable verticalement au moyen d'un système de levage (44) pour les animaux de sol dur (35),
**CARACTÉRISÉ PAR**
une possibilité d'agencement vertical de l'au moins un système de rails (03) sur la constructions offshore (01), avec une extensibilité sur la hauteur (05) de la zone sous-marines (06) jusqu'au-dessus de la surface de l'eau (07), par un chariot d'habitation (22) avec un panier d'habitation et de capture (26) en tant que système de filet (45) et un chariot de récupération (08), comportant respectivement un corps de base (09) et un corps déplaçable (10) pour l'accouplement amovible avec le système de rails (03) et le déplacement sur celui-ci, ainsi que des moyens pour l'accouplement amovible entre eux, et par un accouplement amovible du système de levage (44) avec le chariot de récupération (08).

2. Dispositif (28) selon la revendication 1, **CARACTÉRISÉ PAR**
plusieurs systèmes de rails (03) côte à côte et un nombre correspondant de chariots d'habitation (22), mais un seul chariot de récupération (08) commun.

3. Dispositif (28) selon la revendication 1 ou 2, **CARACTÉRISÉ PAR**
une conception du système de rails (03) avec un rail de guidage en forme de T (04), et une réalisation des corps déplaçables (10) du chariot d'habitation (22) et du chariot de récupération (08) avec une rainure de guidage en forme de T (24) et des espaceurs (25) sur le chariot d'habitation (22) et le chariot de récupération (08) pour la stabilisation latérale.

4. Dispositif (28) selon la revendication 2, **CARACTÉRISÉ PAR**
des évidements (49) dans les rails de guidage en forme de T (04) pour le montage du chariot de récupération (08) et du chariot d'habitation (22).

5. Dispositif (28) selon l'une ou plusieurs des revendications précédentes,
**CARACTÉRISÉ PAR**
au moins un cylindre de guidage (11) pouvant prendre appui sur la constructions offshore (01, 02), et des poids (12) avec un effet de force dirigé horizontalement sur la constructions offshore (01, 02) sur le chariot de récupération (08) et/ou le chariot d'habitation (22).

6. Dispositif (28) selon l'une ou plusieurs des revendications précédentes,
**CARACTÉRISÉ PAR**
des poids supplémentaires (14) sur le chariot de récupération (08) et/ou le chariot d'habitation (22), avec un effet de force dirigé verticalement vers le bas.

7. Dispositif (28) selon l'une ou plusieurs des revendications précédentes,
**CARACTÉRISÉ PAR**
une bride de réception (17) à l'extrémité inférieure du chariot de récupération (08) et un montage fixe d'une pince de récupération (18) sur la bride de réception (17) du chariot de récupération (08) et d'une épine de récupération fixe (19) à l'extrémité supérieure du chariot d'habitation (22), dans lequel la pince de récupération (18) s'enclenche fixement mais de façon amovible sur l'épine de récupération (19) du chariot d'habitation (22) lors d'un abaissement vertical du chariot de récupération (08).

8. Dispositif (28) selon l'une ou plusieurs des revendications précédentes,
**CARACTÉRISÉ PAR**
une conception du panier d'habitation et de capture (26) du chariot d'habitation (22) avec un clapet d'habitation et de capture rabattable (30).

9. Dispositif (28) selon la revendication 7 et 8, **CARACTÉRISÉ PAR**
un agencement amovible d'une épine de récupération supplémentaire (40) sur une tige de réception (39) sur l'épine de récupération (19) sur le chariot d'habitation (22) et au moins un câble de clapet (41) fixé par l'une de ses extrémités à l'extrémité supérieure du clapet d'habitation et de capture (30) et par son autre extrémité à l'extrémité supérieure du chariot d'habitation (22) sur l'épine de récupération supplémentaire (40), en passant à travers au moins un oeil (42), dans lequel la pince de récupération (18) s'enclenche sur l'épine de récupération supplémentaire (40) lors d'un abaissement vertical du chariot de récupération (08).

10. Dispositif (28) selon l'une ou plusieurs des revendications précédentes,
**CARACTÉRISÉ PAR**
une conception du panier d'habitation et de capture (26) du chariot d'habitation (22) avec des éléments attractifs (34) pour la colonisation d'animaux de sol dur (35) et/ou avec des paniers à clapets pivotants supplémentaires (37) à l'extrémité inférieure du panier d'habitation et de capture (26).

11. Dispositif (28) selon l'une ou plusieurs des revendications précédentes,
**CARACTÉRISÉ PAR**
l'apport d'épines de pénétration (30) à l'extrémité inférieure du panier d'habitation et de capture (26) et/ou d'épines de pénétration supplémentaires (32) à l'extrémité supérieure du clapet d'habitation et de capture (30).

12. Dispositif (28) selon l'une ou plusieurs des revendications précédentes,
**CARACTÉRISÉ PAR**
une conception rectiligne, courbe ou angulaire de la section transversale horizontale du panier d'habitation et de capture (26) du chariot d'habitation (22).

13. Dispositif (28) selon l'une ou plusieurs des revendications précédentes,
**CARACTÉRISÉ PAR**
un système de brosses (38) sur le chariot d'habitation (22), sur sa largeur (27), dans lequel la construction offshore (01, 02) peut être touchée par le système de brosses (38).
